# EUROPEAN PATENT SPECIFICATION

(11) **EP 4 398 507 B1**
(45) Date of publication and mention of the grant of the patent: **07.10.2026**
(21) Application number: 24178550.0
(22) Date of filing: 08.11.2019
(51) Int. Cl.: H04W 72/04, H04L 5/00, H04L 1/18

(54) **UPLINK DATA TRANSMISSION METHOD AND APPARATUS, TERMINAL, AND STORAGE MEDIUM**
VERFAHREN UND VORRICHTUNG ZUR UPLINK-DATENÜBERTRAGUNG, ENDGERÄT UND SPEICHERMEDIUM
PROCÉDÉ ET APPAREIL DE TRANSMISSION DE DONNÉES DE LIAISON MONTANTE, TERMINAL ET SUPPORT DE STOCKAGE

(43) Date of publication of application: 10.07.2024
(62) Document number(s) of the earlier application(s) in accordance with Art. 76 EPC: 19951537.0 / 4 048 002
(73) Proprietor: GUANGDONG OPPO MOBILE TELECOMMUNICATIONS CORP., LTD., Dongguan, Guangdong 523860 (CN)
(72) Inventor: XU, Jing, Dongguan, 523860 (CN); LIN, Yanan, Dongguan, 523860 (CN)
(74) Representative: Santarelli

(56) References cited:
- WO-A1-2019/194660
- ERICSSON: "On UCI Multiplexing on PUCCH", vol. RAN WG1, no. Sanya, China; 20180416 - 20180420, 7 April 2018 (2018-04-07), XP051414396, Retrieved from the Internet <URL:http://www.3gpp.org/ftp/tsg%5Fran/WG1%5FRL1/TSGR1%5F92b/Docs/> [retrieved on 20180407]

## Description

### TECHNICAL FIELD

The present application relates to the technical field of communications, and in particular, relates to an uplink data transmission method and apparatus, and a storage medium.

### BACKGROUND

In the new radio (NR) communication system, the network device supports a hybrid automatic repeat reQuest (HARQ). That is, after the network device transmits data to the terminal, the terminal needs to send a HARQ feedback message (HARQ-ACK) to the network device. The HARQ-ACK feedback message may be an acknowledgment message (ACK) or a non-acknowledgment message (NACK). The network device then performs retransmission or transmits the next data according to the HARQ-ACK.

When the terminal sends the HARQ-ACK to the network device, the HARQ-ACK is generally encoded into a HARQ-ACK codebook, and the HARQ-ACK codebook is carried on the PUCCH resource and is transmitted to the network device. However, when the terminal transmits the PUCCH to the network device, two PUCCHs may overlap in the time domain. In the related art, when two PUCCHs overlap in the time domain, the PUCCH with the higher priority is selected, and the PUCCH with the higher priority is transmitted to the network device.

ERICSSON: "On UCI Multiplexing on PUCCH", 3GPP DRAFT; R1-1805183, 3RD GENERATION PARTNERSHIP PROJECT (3GPP), vol. RAN WG1, no. Sanya, China, 7 April 2018 discloses that when the PUCCH resource for HARQ-ACK partially overlaps with the PUCCH resource for SR: if the starting symbol of the HARQ-ACK PUCCH resource is before or same as the starting symbol of the SR PUCCH resource, if HARQ-ACK PUCCH resource is based on Format 0 or 2 or 3 or 4, the UE transmits HARQ-ACK and SR (positive or negative) based on the HARQ-ACK PUCCH resource, using the agreed HARQ-ACK/SR multiplexing methods for the HARQ-ACK and SR PUCCH resources with the same starting symbols. WO 2019/194660A1 discloses a wireless communication system and a method and an apparatus therefor, the method includes determining a plurality of physical uplink control channel (PUCCH) resources for transmitting a plurality of pieces of uplink control information (UCI), multiplexing UCI related to (1) a first PUCCH resource among the determined plurality of PUCCH resources and (2) one or more second PUCCH resources overlapped with the first PUCCH resource on a time axis, based on the first PUCCH resource, and determining a third PUCCH resource for transmitting the multiplexed UCI. The first PUCCH resource is a PUCCH resource having an earliest starting symbol among the determined plurality of PUCCH resources.

### SUMMARY

The embodiments of the present application provide an uplink data transmission method and apparatus, and a storage medium through which reliability of data transmission is improved, latency is reduced, and unnecessary retransmission is avoided.

The invention is set out in the appended set of claims.

In the embodiments of the present application, if the first PUCCH and the second PUCCH overlap in the time domain and if the priority of the first HARQ-ACK codebook carried on the first PUCCH and the priority of the second HARQ-ACK codebook carried on the second PUCCH are different, the third PUCCH is selected from the PUCCH set configured for the HARQ-ACK codebook with the highest priority in the first HARQ-ACK codebook and the second HARQ-ACK codebook, the first HARQ-ACK codebook and the second HARQ-ACK codebook are carried onto the third PUCCH, and the first HARQ-ACK codebook and the second HARQ-ACK codebook are transmitted to the network device by means of the third PUCCH in a sub-slot where the first PUCCH is located, where the first HARQ-ACK codebook is carried onto the sub-slot of the first PUCCH. Since both the first HARQ-ACK codebook and second HARQ-ACK codebook are carried onto the third PUCCH, the first HARQ-ACK codebook and the second HARQ-ACK codebook are subjected to multiplex transmission, and reliability of data transmission is thereby improved, latency is reduced, and unnecessary retransmission is avoided.

### BRIEF DESCRIPTION OF THE DRAWINGS

To make the technical solutions provided in the embodiments of the present application more clearly illustrated, several accompanying drawings required by the embodiments for description are briefly introduced as follows. Obviously, the drawings in the following description are merely some embodiments of the present application, and for a person having ordinary skill in the art, other drawings can be obtained based on these drawings without inventive effort.
FIG. 1 is a schematic diagram of an implementation environment provided by an exemplary embodiment of the present application.
FIG. 2 is a schematic diagram of two types of HARQ-ACK codebooks provided by an exemplary embodiment of the present application.
FIG. 3 is a flow chart of an uplink data transmission method provided by an exemplary embodiment of the present application.
FIG. 4 is a schematic diagram of two PUCCHs provided by an exemplary embodiment of the present application.
FIG. 5 is a flow chart of an uplink data transmission method provided by an exemplary embodiment of the present application not covered by the invention.
FIG. 6 is a flow chart of an uplink data transmission method provided by an exemplary embodiment of the present application not covered by the invention.
FIG. 7 is a schematic structural diagram of a data transmission apparatus provided by an exemplary embodiment of the present application.
FIG. 8 is a schematic structural diagram of a data transmission apparatus provided by an exemplary embodiment of the present application not covered by the invention.
FIG. 9 is a schematic structural diagram of a device provided by an exemplary embodiment of the present application not covered by the invention.

### DESCRIPTION OF THE EMBODIMENTS

To better illustrate the goal, technical solutions, and advantages of the present application, the accompanying drawings are included to provide a detailed description of the embodiments of the present application.

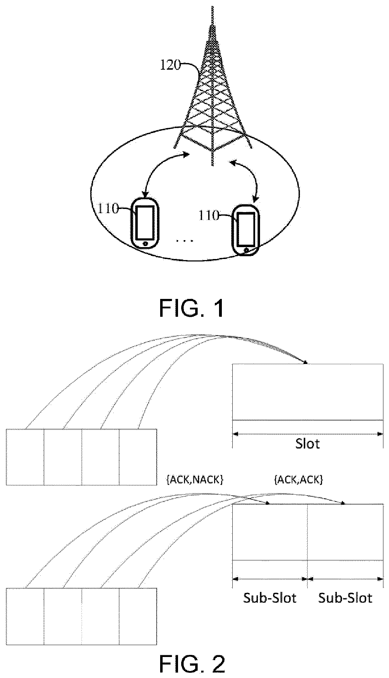

FIG. 1 is a schematic diagram of an implementation environment according to an exemplary embodiment. The implementation environment mainly includes a terminal 110 and a network device 120. The terminal 110 may perform wireless communication with the network device 120 wirelessly, and the terminal 110 may transmit uplink data to the network device 120 according to a method provided in the embodiments of the present application. In some embodiments, the terminal 110 may also be referred to as user equipment. The network device 120 may be a base station, for example, a 4^{th} generation mobile communication technology (4G) base station, a 5G (5^{th}-generation Node B, gNB) base station, or a network device in a future communication network, which is not limited in the embodiments of the present application.

In the embodiments of the present application, when a first physical uplink control channel (PUCCH) and a second PUCCH to be transmitted overlap in a time domain, multiplexing may be performed. Herein, the first PUCCH carries first uplink information, and the second PUCCH carries second uplink information. The first uplink information may include at least one of uplink control information and uplink data. Similarly, the second uplink information may also include at least one of the uplink control information and the uplink data.

In the embodiments of the present application, the first uplink information may be a first HARQ-ACK codebook, and the second uplink information may be a second HARQ-ACK codebook. Herein, the first HARQ-ACK codebook may be a HARQ-ACK codebook encapsulating one HARQ-ACK or may be a HARQ-ACK codebook encapsulating a plurality of HARQ-ACKs. The second HARQ-ACK codebook may also be a HARQ-ACK codebook encapsulating one HARQ-ACK or may be a HARQ-ACK codebook encapsulating a plurality of HARQ-ACKs.

The first uplink information may be a first HARQ-ACK codebook, and the second uplink information may be uplink control information (UCI) other than HARQ-ACK. Herein, the second uplink information being the UCI other than the HARQ-ACK means that the encapsulated information is not the HARQ-ACK. That is, the HARQ-ACK at least includes first HARQ-ACK, and the first HARQ-ACK is HARQ-ACK encoded in the first HARQ-ACK codebook. For instance, the second uplink information is a scheduling request (SR) or a channel state information reference signal (CSI-RS).

When the first uplink information is the first HARQ-ACK codebook, the second uplink information is the second HARQ-ACK codebook, and the network device 120 sends downlink data to the terminal 110, the terminal 110 feeds back the HARQ-ACK of the downlink data to the network device 120. The HARQ-ACK may be ACK and may also be NACK. Further, when the terminal 110 sends the HARQ-ACK to the network device 120, the HARQ-ACK is generally encoded into a HARQ-ACK codebook, and the HARQ-ACK codebook is carried on a PUCCH resource and is transmitted to the network device 120. Further, the terminal 110 may encode one HARQ-ACK in a same slot into one HARQ-ACK codebook and may also encode at least two HARQ-ACKs in the same slot into one HARQ-ACK codebook. The terminal 110 may further encode one HARQ-ACK in a same sub-slot into one HARQ-ACK codebook and may also encode at least two HARQ-ACKs in the same sub-slot into one HARQ-ACK codebook.

With reference to FIG. 2, in Rel-16 of NR, the terminal 110 supports two types of HARQ-ACK codebooks, namely, a slot-level ARQ-ACK codebook and a sub-slot-level ARQ-ACK codebook. Regarding the slot-level ARQ-ACK codebook, the terminal 110 may carry the HARQ-ACK in one slot or multiplex at least two HARQ-ACKs in one slot, and the slot belongs to the time domain resource of the PUCCH. Regarding the sub-slot-level ARQ-ACK codebook, the terminal 110 may carry the HARQ-ACK in one sub-slot or multiplex at least two HARQ-ACKs in one sub-slot, and the sub-slot belongs to the time domain resource of the PUCCH.

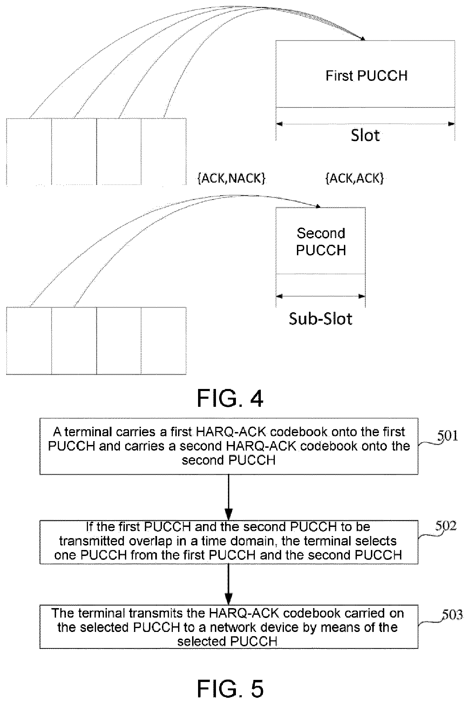

Note that one slot includes two sub-slots. In FIG. 2, 4 HARQ-ACKs are multiplexed into one slot and 2 HARQ-ACKs are multiplexed into one sub-slot as an example for illustration.

In the embodiments of the present application, the terminal 110 encodes one or at least two first HARQ-ACKs into a first HARQ-ACK codebook and carries the first HARQ-ACK codebook onto the first PUCCH. When the terminal 110 has not sent the first PUCCH to the network device 120, the terminal 110 generates one or at least two second HARQ-ACKs again, encodes one or at least two second HARQ-ACKs into the second HARQ-ACK codebook, and carries the second HARQ-ACK codebook onto the second PUCCH. In addition, the first PUCCH and the second PUCCH overlap in the time domain.

In an embodiment, multiplex transmission may be performed on the first HARQ-ACK codebook and the second HARQ-ACK codebook by the terminal 110. That is, the first HARQ-ACK codebook and the second HARQ-ACK codebook are multiplexed onto a third PUCCH, and the first HARQ-ACK codebook and the second HARQ-ACK codebook are transmitted to the network device 120 by means of the third PUCCH.

In another embodiment, the terminal 110 may select a PUCCH from the first PUCCU and the second PUCCH and transmits uplink information carried thereon to the network device 120 through the selected PUCCH. For instance, when the selected PUCCH is the first PUCCH, the terminal 110 transmits the first HARQ-ACK codebook to the network device 120 by means of the first PUCCH. When the selected PUCCH is the second PUCCH, the terminal 110 transmits the second HARQ-ACK codebook to the network device 120 by means of the second PUCCH.

In the embodiments of the present application, another scenario is provided, the terminal 110 encodes one or a plurality of first HARQ-ACKs into a first HARQ-ACK codebook and carries the first HARQ-ACK codebook onto the first PUCCH. When the terminal 110 has not sent the first PUCCH to the network device 130, the terminal 110 needs to send the UCI other than the HARQ-ACK to the network device 130 and carries the UCI onto the second PUCCH. In addition, the first PUCCH and the second PUCCH overlap in the time domain. Multiplex transmission may be performed on the first HARQ-ACK codebook and the UCI by the terminal 110. That is, the first HARQ-ACK codebook and the UCI are multiplexed onto the third PUCCH, and the first HARQ-ACK codebook and the UCI are transmitted to the network device 130 by means of the third PUCCH.

The processing procedures of these three scenarios are described in detail in the following three embodiments provided as follows.

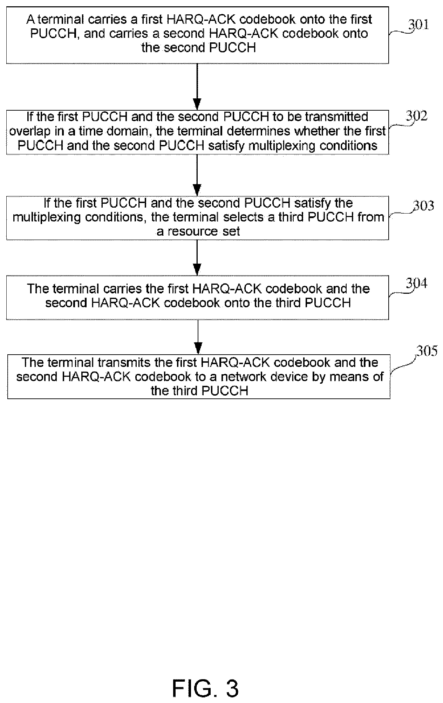

FIG. 3 is a flow chart of an uplink data transmission method according to an exemplary embodiment of the present application. This method may be applied in the abovementioned implementation environment. In the embodiments of the present application, the first uplink information is the first HARQ-ACK codebook, and the second uplink information is the second HARQ-ACK codebook. In addition, multiplex transmission performed on the first HARQ-ACK codebook and the second HARQ-ACK codebook is described as an example. The method includes the following steps so as to be implemented.

In step 301, a terminal carries a first HARQ-ACK codebook onto a first PUCCH and carries a second HARQ-ACK codebook onto a second PUCCH.

The first HARQ-ACK codebook may be a slot HARQ-ACK codebook or a sub-slot HARQ-ACK codebook. The second HARQ-ACK codebook may be a slot HARQ-ACK codebook or a sub-HARQ-ACK codebook. With reference to FIG. 4, the first HARQ-ACK codebook being a slot HARQ-ACK codebook and the second HARQ-ACK codebook being a sub-slot HARQ-ACK codebook are treated as an example for description in FIG. 4.

This step may be implemented through steps (1) to (6) including the following.
(1) A network device transmits first downlink information to a terminal by means of a first downlink channel.
(2) The terminal generates first HARQ-ACK according to receipt of the first downlink information.
   The first HARQ-ACK may be an ACK message or a NACK message. In the case that the terminal successfully receives the first downlink information, the terminal returns the ACK message to the network device, and in the case that the terminal does not successfully receive the first downlink information, the terminal returns the NACK message to the network device.
(3) The terminal encodes the first HARQ-ACK into a first HARQ-ACK codebook and carries the first HARQ-ACK codebook onto a first PUCCH.

Note that the terminal may encode the first HARQ-ACK into the first HARQ-ACK codebook and may also simultaneously encode the first HARQ-ACK and other HARQ-ACKs in a time slot where the first HARQ-ACK is located into the first HARQ-ACK codebook.

The first HARQ-ACK codebook may be a slot HARQ-ACK codebook or a sub-slot HARQ-ACK codebook. In an embodiment, the terminal may encode the first HARQ-ACK into a slot HARQ-ACK codebook or a sub-slot HARQ-ACK codebook according to its own configuration. For instance, when the HARP-ACK encoding format configured by the terminal is the slot HARQ-ACK codebook, the terminal encodes the first HARQ-ACK into the first slot HARQ-ACK codebook, and when the HARP-ACK encoding format configured by the terminal is the sub-slot HARQ-ACK codebook, the terminal encodes the first HARQ-ACK into the first sub-slot HARQ-ACK codebook.

In another embodiment, the network device may instruct the HARQ-ACK coding format of the terminal, and correspondingly, the terminal encodes the first HARQ-ACK into the coding format instructed by the network device. For instance, when the HARQ-ACK encoding format instructed by the network device is the slot HARQ-ACK codebook, the terminal encodes the first HARQ-ACK into the first slot HARQ-ACK codebook, and when the HARP-ACK encoding format instructed by the network device is the sub-slot HARQ-ACK codebook, the terminal encodes the first HARQ-ACK into the first sub-slot HARQ-ACK codebook.

Note that the network device configures a seventh PUCCH set for transmitting the HARQ-ACK for the terminal. Therefore, after encoding the first HARQ-ACK into the first HARQ-ACK codebook, the terminal may select the first PUCCH from the seventh PUCCH set.

In an embodiment, the terminal selects the first PUCCH according to an amount of data of the first HARQ-ACK codebook. Correspondingly, the step of selecting, by the terminal, the first PUCCH from the seventh PUCCH set may be: the terminal selects the first PUCCH that is not less than the amount of data of the first HARQ-ACK codebook from the seventh PUCCH set. In another embodiment, the network device instructs the terminal to select the first PUCCH. Correspondingly, the step of selecting, by the terminal, the first PUCCH from the seventh PUCCH set may be: The terminal selects the first PUCCH from a sixth PUCCH set according to first instruction information of the network device and/or an amount of data of the first uplink information.

The first instruction information may be a first downlink control information (DCI). Correspondingly, the terminal selects the first PUCCH instructed by the first DCI from the seventh PUCCH set, and the first instruction information may also be a control channel element (CEE) index. Correspondingly, the terminal selects the first PUCCH instructed by the CCE index from the seventh PUCCH set.

(4) The network device transmits second downlink data to the terminal by means of a second downlink channel.

(5) The terminal generates second HARQ-ACK according to receipt of the second downlink data.

Similarly, the second HARQ-ACK may be an ACK message or a NACK message. In the case that the terminal successfully receives the second downlink data, the terminal returns the ACK message to the network device, and in the case that the terminal does not successfully receive the second downlink data, the terminal returns the NACK message to the network device.

(6) The terminal encodes the second HARQ-ACK into a second HARQ-ACK codebook and carries the second HARQ-ACK codebook onto a second PUCCH.

This step is similar to step (3), and description thereof is thus not repeated herein.

Note that there is no strict time sequence between steps (1) to (3) and steps (4) to (6). Steps (1) to (3) may be performed first, followed by steps (4) to (6), or steps (4) to (6) may be performed first, followed by steps (1) to (3).

Note that after obtaining the first HARQ-ACK codebook and the second HARQ-ACK codebook, the terminal may also determine a priority of the first HARQ-ACK codebook and a priority of the second HARQ-ACK codebook. Herein, determination of the priority of the first HARQ-ACK codebook and the priority of the second HARQ-ACK codebook may be made in any of the following four manners:

Regarding the first implementation manner, the terminal determines the priority of the first HARQ-ACK codebook (or the second HARQ-ACK codebook) according to a DCI format adopted by scheduling signaling of the first HARQ-ACK codebook (or the second HARQ-ACK codebook).

For instance, if the DCI format adopted by the scheduling signaling of the first HARQ-ACK codebook (or the second HARQ-ACK codebook) is 0_0/0_1/1_1/1_0, the terminal determines that a priority level of the first HARQ-ACK codebook (or the second HARQ-ACK codebook) is a low priority level, that is, the first HARQ-ACK codebook (or the second HARQ-ACK codebook) is enhanced mobile broadband (EMBB) data. If the DCI format adopted by the scheduling signaling of the first HARQ-ACK codebook (or the second HARQ-ACK codebook) is 0_2/1_2, the terminal determines that the priority level of the first HARQ-ACK codebook (or the second HARQ-ACK codebook) is a high priority level, that is, the first HARQ-ACK codebook (or the second HARQ-ACK codebook) is ultra-reliable and low latency communications (URLLC) data.

Regarding the second implementation manner, the terminal distinguishes the priority level according to a scrambling code of a DCI cyclic redundancy check (CRC) of the first HARQ-ACK codebook (or the second HARQ-ACK codebook).

For instance, if the DCI CRC of the first HARQ-ACK codebook (or the second HARQ-ACK codebook) is scrambled by means of C-RNTI, the terminal determines that the priority level of the first HARQ-ACK codebook (or the second HARQ-ACK codebook) is a low priority level, that is, the first HARQ-ACK codebook (or the second HARQ-ACK codebook) is EMBB data. If the DCI CRC of the first HARQ-ACK codebook (or the second HARQ-ACK codebook) is scrambled by means of MCS-C-RNTI, the terminal determines that the priority level of the first HARQ-ACK codebook (or the second HARQ-ACK codebook) is a high priority level, that is, the first HARQ-ACK codebook (or the second HARQ-ACK codebook) is URLLC data.

Regarding the third implementation manner, the terminal determines the priority of the first HARQ-ACK codebook (or the second HARQ-ACK codebook) according to a domain added in a DCI payload of the first HARQ-ACK codebook (or the second HARQ-ACK codebook).

For instance, 1 bit is added to the DCI payload of the first HARQ-ACK codebook (or the second HARQ-ACK codebook), and if the bit is 0, the terminal determines that the priority level of the first HARQ-ACK codebook (or the second HARQ-ACK codebook) is a low priority level, that is, the first HARQ-ACK codebook (or the second HARQ-ACK codebook) is EMBB data. If the bit is 1, the terminal determines that the priority level of the first HARQ-ACK codebook (or the second HARQ-ACK codebook) is a high priority level, that is, the first HARQ-ACK codebook (or the second HARQ-ACK codebook) is URLLC data.

Regarding the fourth implementation manner, the terminal determines the priority level of the first HARQ-ACK codebook (or the second HARQ-ACK codebook) according to a CORESET/search space of the first HARQ-ACK codebook (or the second HARQ-ACK codebook) by means of a CORESET/Searchspace where the detected DCI is located.

For instance, if DCI is detected by the DCI of the first HARQ-ACK codebook (or the second HARQ-ACK codebook) in a CORESET1/Searchspace1 (region corresponding to the low priority level) region, the terminal determines that the priority level of the first HARQ-ACK codebook (or the second HARQ-ACK codebook) is a low priority level, that is, the first HARQ-ACK codebook (or the second HARQ-ACK codebook) is EMBB data. If DCI is detected by the DCI of the first HARQ-ACK codebook (or the second HARQ-ACK codebook) in a CORESET1/Searchspace2 (region corresponding to the high priority level) region, the terminal determines that the priority level of the first HARQ-ACK codebook (or the second HARQ-ACK codebook) is a high priority level, that is, the first HARQ-ACK codebook (or the second HARQ-ACK codebook) is URLLC.

In step 302, if the first PUCCH and the second PUCCH to be transmitted overlap in the time domain, the terminal determines whether the first PUCCH and the second PUCCH satisfy multiplexing conditions.

The multiplexing conditions include a first multiplexing condition (not claimed) or a second multiplexing condition (as claimed). The first multiplexing condition at least includes the priority of the first HARQ-ACK codebook and the priority of the second HARQ-ACK codebook being the same. The first multiplexing condition may further include the first PUCCH and the second PUCCH satisfying a first time sequence condition. The first time sequence condition is that a distance between the first PUCCH and the first downlink channel in the time domain satisfies a latency demand of the terminal, and a distance between the second PUCCH and the second downlink channel in the time domain satisfies the latency demand of the terminal. Alternatively, the first time sequence condition is that a distance between multiplexed third PUCCH and the first downlink channel (or the second downlink channel) satisfies the latency demand of the terminal.

The second multiplexing condition at least includes the priority of the first HARP-ACK codebook and the priority of the second HARQ-ACK codebook being different. The second multiplexing condition may further include the first PUCCH and the second PUCCH satisfying a second time sequence condition. The second time sequence condition is that a distance between the first PUCCH and the first downlink channel in the time domain satisfies the latency demand of the terminal, and a distance between the second PUCCH and the second downlink channel in the time domain satisfies the latency demand of the terminal. Alternatively, the first time sequence condition is that a distance between multiplexed third PUCCH and the first downlink channel (or the second downlink channel) satisfies the latency demand of the terminal.

In the embodiments of the present application, subsequent multiplexing is performed only when the first PUCCH and the second PUCCH satisfy the first time sequence condition or the second time sequence condition. As such, the PUCCHs that satisfy the latency demand of the terminal are multiplexed, and the PUCCHs that do not satisfy the latency demand of the terminal are not multiplexed. In this way, resources are saved, resource utilization is increased, reliability of data transmission is improved, latency is decreased, and unnecessary retransmission is avoided.

In the embodiments of the present application not covered by the invention, when the first PUCCH and the second PUCCH satisfy the first multiplexing condition, subsequent multiplexing is performed only when the priority of the first HARQ-ACK codebook and the priority of the second HARQ-ACK codebook are the same. The two HARQ-ACK codebooks with the same priority level may thereby be multiplexed, so that the HARQ-ACK codebooks with the same priority level may be transmitted at the same time, and the latency is reduced.

In the embodiments of the present application, when the first PUCCH and the second PUCCH satisfy the second multiplexing condition, subsequent multiplexing is performed only when the priority of the first HARQ-ACK codebook and the priority of the second HARQ-ACK codebook are different. Therefore, when the priority levels are different, multiplex transmission may still be performed, and the development of communication technology is thus satisfied.

Note that if the first PUCCH and the second PUCCH satisfy the multiplexing conditions, step 303 is performed, and if the first PUCCH and the second PUCCH do not satisfy the multiplexing conditions, one PUCCH is selected from the first PUCCH and the second PUCCH, and the selected PUCCH is transmitted to the network device.

In step 303, if the first PUCCH and the second PUCCH satisfy the multiplexing conditions, the terminal selects the third PUCCH from the PUCCH set.

The terminal may select the third PUCCH from the PUCCH set according to at least one of following information. Herein, the following information includes second instruction information of the network device and a sum of amount of data, and the sum of amount of data is a sum of an amount of data of the first HARQ-ACK codebook and an amount of data of the second HARQ-ACK codebook. Correspondingly, in this step, the terminal may select the third PUCCH instructed by the second instruction information from the PUCCH set according to the second instruction information of the network device.

Alternatively, the terminal determines the sum of amount of data of the first HARQ-ACK codebook and the second HARQ-ACK codebook and selects the third PUCCH carrying the amount of data not less than the sum of amount of data from the PUCCH set according to the sum of amount of data.

Alternatively, the terminal, according to the second instruction information of the network device and a sum of data amounts of the first HARQ-ACK codebook and the second HARQ-ACK codebook, selects the third PUCCH instructed by the second instruction information and carrying the amount of data not less than the sum of data amounts.

Herein, the second instruction information may be a second DCI message or a CCE index. The third PUCCH may be different from the first PUCCH and the second PUCCH, and may also be the same as the first PUCCH or the second PUCCH.

The terminal may select the third PUCCH according to the priority level of the first HARQ-ACK codebook and the priority level of the second HARQ-ACK codebook, that is, the following first implementation manner. The terminal may also select the third PUCCH according to a multiplexing window of the first HARQ-ACK codebook and a multiplexing window of the second HARQ-ACK codebook, that is, the following second implementation manner. The network device may also configure a PUCCH set dedicated to multiplex transmission for the terminal, and the terminal selects the third PUCCH from this PUCCH set, that is, the following third implementation manner.

Regarding the first implementation manner, the step of selecting, by the terminal, the third PUCCH from the PUCCH set includes: the terminal selects the third PUCCH from a first PUCCH set, and the first PUCCH set is a PUCCH set configured for uplink data with a highest priority (as claimed) or a lowest priority (not claimed), wherein the uplink data includes the first HARQ-ACK codebook and the second HARQ-ACK codebook.

In the case that the first PUCCH set is the PUCCH configured for the uplink data with the highest priority, wherein the uplink data includes the first HARQ-ACK codebook and the second HARQ-ACK codebook, if the priority of the first HARQ-ACK codebook is higher than the priority of the second HARQ-ACK codebook, the first PUCCH set is the PUCCH configured for the first HARQ-ACK codebook. If the priority of the first HARQ-ACK codebook is lower than the priority of the second HARQ-ACK codebook, the first PUCCH set is the PUCCH set configured for the second HARQ-ACK codebook.

In the case that the first PUCCH set is the PUCCH configured for the uplink data with the lowest priority, wherein the uplink data includes the first HARQ-ACK codebook and the second HARQ-ACK codebook, if the priority of the first HARQ-ACK codebook is higher than the priority of the second HARQ-ACK codebook, the first PUCCH set is the PUCCH configured for the second HARQ-ACK codebook. If the priority of the first HARQ-ACK codebook is lower than the priority of the second HARQ-ACK codebook, the first PUCCH set is the PUCCH set configured for the first HARQ-ACK codebook.

For instance, the terminal selects the third PUCCH from the first PUCCH set configured for the high-priority HARQ-ACK codebook according to the DCI instruction corresponding to the high-priority HARQ-ACK codebook, the CCE index, and/or the multiplexed UCI load. Taking the sub-slot HARQ-ACK codebook as high priority as an example, the terminal determines the third PUCCH from the first PUCCH set configured for the sub-slot HARQ-ACK codebook according to the DCI instruction corresponding to the high-priority HARQ-ACK codebook, the CCE index, and/or the multiplexed UCI load.

In the embodiments of the present application, when a first target HARQ-ACK codebook is the uplink information with the highest priority, the reliability of transmission of the high-priority HARQ-ACK may be ensured and the latency may be reduced.

Regarding the second implementation manner not covered by the invention, the step of selecting, by the terminal, the third PUCCH from the PUCCH set may be: the terminal selects the third PUCCH from a second PUCCH set, and the second PUCCH set is a PUCCH set configured for uplink data occupying a minimum or maximum PUCCH video resource in the first HARQ-ACK codebook and the second HARQ-ACK codebook. Herein, a PUCCH time frequency resource occupied by the first HARQ-ACK codebook is the multiplexing window of the first HARQ-ACK codebook. A PUCCH time frequency resource occupied by the second HARQ-ACK codebook is the multiplexing window of the second HARQ-ACK codebook. That is, the second PUCCH set is the PUCCH set configured for the HARQ-ACK codebook with the minimum or maximum multiplexing window in the first HARQ-ACK codebook multiplexing window and the second HARQ-ACK codebook multiplexing window.

For instance, when the first HARQ-ACK codebook is the sub-slot HARQ-ACK codebook and the second HARQ-ACK codebook is the slot HARQ-ACK codebook, it is determined that the first HARQ-ACK codebook multiplexing window is the minimum, and the second HARQ-ACK codebook multiplexing window is the maximum. When the first HARQ-ACK codebook is the slot HARQ-ACK codebook and the second HARQ-ACK codebook is the sub-slot HARQ-ACK codebook, it is determined that the second HARQ-ACK codebook multiplexing window is the minimum, and the first HARQ-ACK codebook multiplexing window is the maximum.

For instance, the terminal determines the third PUCCH from the second PUCCH set configured for the HARQ-ACK codebook with the minimum multiplexing window according to the DCI instruction corresponding to the HARQ-ACK codebook with the minimum multiplexing window, the CCE index, and/or the multiplexed UCI load. In this case, the terminal determines the third PUCCH from the second PUCCH set configured for the sub-slot HARQ-ACK codebook according to the DCI instruction corresponding to the sub-slot HARQ-ACK codebook, the CCE index, and/or the multiplexed UCI load, and transmission is performed in the current sub-slot.

In the embodiments of the present application, the terminal selects the third PUCCH according to the multiplexing window of the first HARQ-ACK codebook and the multiplexing window of the second HARQ-ACK codebook, and in this way, a capacity of PUCCH resources used for HARQ-ACK transmission.

Regarding the third implementation manner not covered by the invention, the step of selecting, by the terminal, the third PUCCH from the PUCCH set may be: the terminal selects the third PUCCH from a third PUCCH set, and the third PUCCH set is a PUCCH set configured for the terminal by the network device for simultaneous transmission of a plurality of uplink information. That is, the third PUCCH set is the PUCCH set dedicated to multiplex transmission for the terminal by the network device.

In the embodiments of the present application, the network device configures the third PUCCH set dedicated to multiplex transmission for the terminal. When the terminal needs to perform multiplex transmission, a third PUCCH resource is directly selected from the third PUCCH set, and efficiency is thereby improved.

Note that in the embodiments of the present application, the terminal is configured with these three rules, and according to these three rules, the third PUCCH resource is selected, so latency is thereby decreased, and efficiency is improved.

Note that in an embodiment, if the first PUCCH and the second PUCCH to be transmitted overlap in the time domain, it may be determined first whether the first PUCCH and the second PUCCH satisfy the multiplexing conditions. If the first PUCCH and the second PUCCH satisfy the multiplexing conditions, "the terminal selects the third PUCCH from the PUCCH set" in step 303 is performed. If the first PUCCH and the second PUCCH do not satisfy the multiplexing conditions, one of the first PUCCH and the second PUCCH is selected and transmitted.

In another embodiment, if the first PUCCH and the second PUCCH to be transmitted overlap in the time domain, determination of satisfaction of the multiplexing conditions may not have to be made, and "the terminal selects the third PUCCH from the PUCCH set" in step 303 is directly performed.

In step 304, the terminal carries the first HARQ-ACK codebook and the second HARQ-ACK codebook onto the third PUCCH.

The terminal re-encodes the first HARQ-ACK codebook and the second HARQ-ACK codebook, obtains a third HARQ-ACK codebook, and carries the third HARQ-ACK codebook onto the third PUCCH.

In step 305, the terminal transmits the first HARQ-ACK codebook and the second HARQ-ACK codebook to the network device by means of the third PUCCH.

The terminal transmits the first HARQ-ACK codebook and the second HARQ-ACK codebook to the network device by means of the third PUCCH in a sub-slot where the first PUCCH is located, and the first HARQ-ACK codebook is carried onto the sub-slot of the first PUCCH. That is, the multiplexing window of the first HARQ-ACK codebook is a sub-slot, that is, the first HARQ-ACK codebook may be a sub-slot HARQ-ACK codebook.

In the embodiments of the present application, if the first PUCCH and the second PUCCH overlap in the time domain, the third PUCCH is selected from the PUCCH set, the first HARQ-ACK codebook and the second HARQ-ACK codebook are carried onto the third PUCCH, and the first uplink information and the second uplink information are transmitted to the network device by means of the third PUCCH. Since the first HARQ-ACK codebook and the second HARQ-ACK codebook are both carried onto the third PUCCH, the first HARQ-ACK codebook and the second HARQ-ACK codebook are multiplexed. In this way, the reliability of data transmission is improved, latency is decreased, and unnecessary retransmission is avoided.

FIG. 5 is a flow chart of an uplink data transmission method according to an exemplary embodiment of the present application not covered by the invention. This method may be applied in the abovementioned implementation environment. In the embodiments of the present application, the first uplink information is the first HARQ-ACK codebook, and the second uplink information is the second HARQ-ACK codebook. In addition, selection and transmission of one of the first HARQ-ACK codebook and the second HARQ-ACK codebook are described as an example. The method may include the following steps so as to be implemented.

In step 501, a terminal carries a first HARQ-ACK codebook onto a first PUCCH and carries a second HARQ-ACK codebook onto a second PUCCH.

This step is identical to step 501, and description thereof is thus not repeated herein.

In step 502, if the first PUCCH and the second PUCCH to be transmitted overlap in a time domain, the terminal selects one PUCCH from the first PUCCH and the second PUCCH.

The terminal may select one PUCCH to be scheduled later from the first PUCCH and the second PUCCH, that is, the following first implementation manner. The terminal may also select one PUCCH with a small HARQ-ACK codebook window from the first PUCCH and the second PUCCH, that is, the following second implementation manner. The terminal may also select one PUCCH with an early ending time from the first PUCCH and the second PUCCH, that is, the following third implementation manner. According to the first HARQ-ACK codebook multiplexing window and the second HARQ-ACK codebook multiplexing window, the terminal may select the next PUCCH of the multiplexing window, that is, the following fourth implementation manner.

Regarding the first implementation manner, the step of selecting, by the terminal, one PUCCH from the first PUCCH and the second PUCCH may be: the terminal elects one PUCCH with a later scheduling time from the first PUCCH and the second PUCCH according to a scheduling time of the first PUCCH and a scheduling time of the second PUCCH.

For instance, if the scheduling time of the first PUCCH is later than the scheduling time of the second PUCCH, the terminal selects the first PUCCH, and if the scheduling time of the second PUCCH is later than the scheduling time of the first PUCCH, the terminal selects the second PUCCH.

In the embodiments of the present application, the terminal selects the PUCCH that is scheduled later from the first PUCCH and the second PUCCH, so that the terminal may determine the priority based on a global domain and implementation may be made through a scheduling sequence.

Regarding the second implementation manner, the step of selecting, by the terminal, one PUCCH from the first PUCCH and the second PUCCH may be: the terminal selects one PUCCH with a shortest length from the first PUCCH and the second PUCCH according to a length of the first PUCCH in a time frequency and a length of the second PUCCH in the time frequency.

For instance, in the case that the first PUCCH carries the sub-slot HARQ-ACK codebook and the second PUCCH carries the slot HARQ-ACK codebook, the terminal selects the first PUCCH. In the case that the first PUCCH carries the slot HARQ-ACK codebook and the second PUCCH carries the sub-slot HARQ-ACK codebook, the terminal selects the second PUCCH.

In the embodiments of the present application, the terminal selects the PUCCH with a small HARQ-ACK codebook window from the first PUCCH and the second PUCCH, and in this way, it is ensured that the HARQ-ACK with a short latency is transmitted first.

Regarding the third implementation manner, the step of selecting, by the terminal, one PUCCH from the first PUCCH and the second PUCCH may be: the terminal selects one PUCCH with an earlier ending time from the first PUCCH and the second PUCCH according to an ending time of the first PUCCH in the time domain and an ending time of the second PUCCH in the time domain.

For instance, if the ending time of the first PUCCH in the time domain is later than the ending time of the second PUCCH in the time domain, the terminal selects the first PUCCH, and if the ending time of the second PUCCH in the time domain is later than the ending time of the first PUCCH in the time domain, the terminal selects the second PUCCH.

In the embodiments of the present application, the terminal selects the PUCCH with an earlier ending time from the first PUCCH and the second PUCCH, and in this way, it is ensured that the HARQ-ACK with a short latency is transmitted first, and data transmission efficiency is thereby improved.

Regarding the fourth implementation manner, the step of selecting, by the terminal, one PUCCH from the first PUCCH and the second PUCCH may be: the terminal selects a PUCCH where the uplink information occupying a minimum time frequency resource is located from the first PUCCH and the second PUCCH according to a time frequency resource of the PUCCH occupied by first uplink information and a time frequency resource of the PUCCH occupied by second uplink information. Herein, the time frequency resource occupied by the first PUCCH refers to the first HARQ-ACK codebook multiplexing window, and the time frequency resource occupied by the second PUCCH refers to the second HARQ-ACK codebook multiplexing window. Correspondingly, selecting, by the terminal, a PUCCH where the uplink information occupying a minimum time frequency resource is located from the first PUCCH and the second PUCCH according to the time frequency resource of the PUCCH occupied by the first uplink information and the time frequency resource of the PUCCH occupied by the second uplink information may be: the terminal selects the PUCCH with the smallest multiplexing window from the first HARQ-ACK codebook multiplexing window and the second HARQ-ACK codebook multiplexing window according to the first HARQ-ACK codebook multiplexing window and the second HARQ-ACK codebook multiplexing window.

In step 503, the terminal transmits the HARQ-ACK codebook carried on the selected PUCCH to the network device by means of the selected PUCCH.

For instance, if the selected PUCCH is the first PUCCH, the terminal transmits the first uplink information to the network device by means of the first PUCCH. If the selected PUCCH is the second PUCCH, the terminal transmits the second uplink information to the network device by means of the second PUCCH.

In the embodiments of the present application, if the first PUCCH and the second PUCCH overlap in the time domain, the terminal selects and transmits one PUCCH, and resources are thereby saved in this way. Further, when the terminal selects one PUCCH, the terminal may select the PUCCH that is scheduled later from the first PUCCH and the second PUCCH, so that the priority may be determined based on the global domain and implementation may be made through the scheduling sequence. When the terminal selects one PUCCH for transmission, the terminal may also select the PUCCH with a small HARQ-ACK codebook window, select the PUCCH with an earlier ending time, or selects the PUCCH with a small multiplexing window from the first PUCCH and the second PUCCH, and in this way, it is ensured that the HARQ-ACK with a short latency is transmitted first.

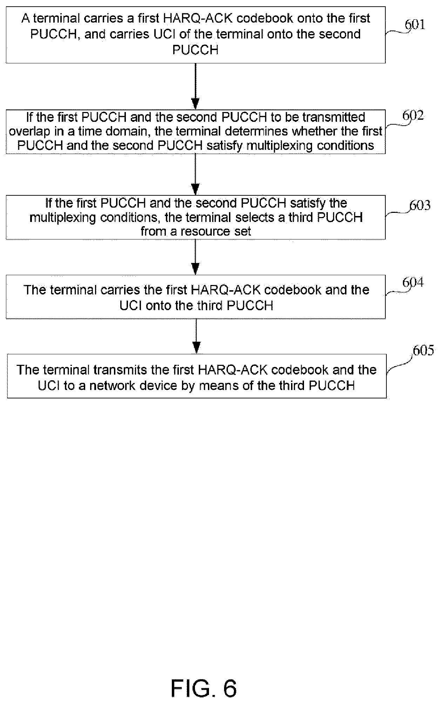

FIG. 6 is a flow chart of an uplink data transmission method according to an exemplary embodiment of the present application not covered by the invention. This method may be applied in the abovementioned implementation environment. In the embodiments of the present application, the first uplink information is the first HARQ-ACK codebook, and the second uplink information is the UCI of the terminal. In addition, multiplex transmission performed on the first HARQ-ACK codebook and the UCI of the terminal is described as an example. The method may include the following steps so as to be implemented.

In step 601, a terminal carries a first HARQ-ACK codebook onto a first PUCCH and carries UCI of the terminal onto a second PUCCH.

The terminal encodes the UCI and carries the encoded UCI onto the second PUCCH.

Note that the step of carrying, by the terminal, the first HARQ-ACK codebook onto the first PUCCH is identical to step 301: carrying, by the terminal, the first HARQ-ACK codebook onto the first PUCCH, so description thereof is thus not repeated herein.

In step 602, if the first PUCCH and the second PUCCH to be transmitted overlap in a time domain, the terminal determines whether the first PUCCH and the second PUCCH satisfy multiplexing conditions.

This step is identical to step 302, and description thereof is thus not repeated herein.

In step 603, if the first PUCCH and the second PUCCH satisfy the multiplexing conditions, the terminal selects a third PUCCH from a PUCCH set.

Note that the step of selecting, by the terminal, the third PUCCH from the PUCCH set and step 303: selecting, by the terminal, the third PUCCH from the PUCCH set are the same, so description thereof is not repeated herein. The third PUCCH may be different from the first PUCCH and the second PUCCH, and may also be the same as the first PUCCH or the second PUCCH.

The PUCCH set may be the PUCCH set where the first PUCCH is located, or may be the PUCCH set where the second PUCCH is located. In the embodiments of the present application, the PUCCH set being the PUCCH set where the first PUCCH is located is treated as an example for description. Correspondingly, the step of selecting the third PUCCH from the PUCCH set may be: the terminal selects the third PUCCH from a fourth PUCCH set, and the fourth PUCCH set is a PUCCH set configured for the first HARQ-ACK codebook.

In an embodiment, when the encoding format of the first HARQ-ACK codebook is the sub-slot HARQ-ACK codebook, the first PUCCH includes a plurality of sub-slot windows. The fourth PUCCH set is a PUCCH set configured for the sub-slot window where the first HARQ-ACK codebook is initially transmitted.

In another embodiment, when the encoding format of the first HARQ-ACK codebook is the sub-slot HARQ-ACK codebook, the first PUCCH includes a plurality of sub-slot windows. The fourth PUCCH set is the PUCCH set configured for the sub-slot window that partially overlaps the second PUCCH in the time domain in the first PUCCH.

In another embodiment, when the encoding format of the first HARQ-ACK codebook is the sub-slot HARQ-ACK codebook, the first PUCCH includes a plurality of sub-slot windows. The fourth PUCCH set is the PUCCH set where the multiplexed sub-slot window is located in the first PUCCH. Herein, the multiplexed sub-slot window is the PUCCH set where the sub-slot window carrying UCI is located in the first PUCCH, the second PUCCH, or the second PUCCH.

In the embodiments of the present application, the PUCCH set being the PUCCH set configured for the UCI is treated as an example for description. Correspondingly, the step of selecting the third PUCCH from the PUCCH set may be: the terminal selects the third PUCCH from a fifth PUCCH set, and the fifth PUCCH set is a PUCCH set configured for the UCI.

In the embodiments of the present application, the network device may also specifically configure a PUCCH set for multiplex transmission for the terminal. Correspondingly, the step of selecting the third PUCCH from the PUCCH set may be: the terminal selects the third PUCCH from a sixth PUCCH set, and the sixth PUCCH set is a PUCCH set configured by the network device for simultaneous transmission of a plurality of information. That is, the sixth PUCCH set is the PUCCH set dedicated to multiplex transmission for the network device.

Note that in the embodiments of the present application, the terminal is configured with these three rules, and according to these three rules, the third PUCCH resource is selected, so latency is thereby decreased, and efficiency is improved.

In step 604, the terminal carries the first HARQ-ACK codebook and the UCI onto the third PUCCH.

This step is similar to step 302, and description thereof is thus not repeated herein.

In step 605, the terminal transmits the first HARQ-ACK codebook and the UCI to the network device by means of the third PUCCH.

This step is identical to step 303, and description thereof is thus not repeated herein.

In the embodiments of the present application, if the first PUCCH and the second PUCCH overlap in the time domain, the third PUCCH is selected from the PUCCH set, the first HARQ-ACK codebook and DUI are carried onto the third PUCCH, and the first uplink information and the UCI are transmitted to the network device by means of the third PUCCH. Since the first HARQ-ACK codebook and the DUI are both carried onto the third PUCCH, the first HARQ-ACK codebook and the DUI are multiplexed. In this way, the reliability of data transmission is improved, latency is decreased, and unnecessary retransmission is avoided.

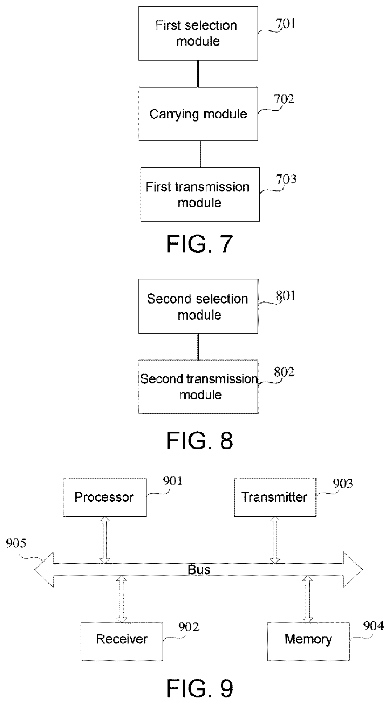

FIG. 7 is a schematic structural diagram of an uplink data transmission apparatus according to an exemplary embodiment, and the apparatus includes a first selection module 701, a carrying module 702, and a first transmission module 703

The first selection module 701 is configured for selecting a third physical uplink control channel (PUCCH) from a PUCCH set if a first PUCCH and a second PUCCH to be transmitted overlap in a time domain.

The carrying module 702 is configured for carrying first uplink information carried on the first PUCCH and second uplink information carried on the second PUCCH onto the third PUCCH.

The first transmission module 703 is configured for transmitting the first uplink information and the second uplink information to a network device by means of the third PUCCH.

In an embodiment, the first uplink information is a first hybrid automatic repeat request feedback codebook (HARQ-ACK codebook), and the second uplink information is a second HARQ-ACK codebook.

The first selection module 701 is further configured for selecting the third PUCCH from a first PUCCH set, and the first PUCCH set is a PUCCH set configured for uplink information with a highest priority (as claimed) or a lowest priority (not claimed) in the first uplink information and the second uplink information.

In an embodiment not covered by the invention, the first selection module 701 is further configured for selecting the third PUCCH from a second PUCCH set, and the second PUCCH set is a PUCCH set configured for uplink data occupying a minimum or maximum PUCCH time domain resource, wherein the uplink data includes the first uplink information and the second uplink information.

In an embodiment not covered by the invention, the first selection module 701 is further configured for selecting the third PUCCH from a third PUCCH set, and the third PUCCH set is a PUCCH set configured by the network device for simultaneous transmission of a plurality of uplink information.

In another embodiment, the first selection module 701 may select the third PUCCH from the PUCCH set according to at least one of following information.

Herein, the following information includes instruction information of the network device and a sum of amount of data, and the sum of amount of data is a sum of an amount of data of the first uplink information and an amount of data of the second uplink information.

In another embodiment not covered by the invention, the first uplink information is a first HARQ-ACK codebook, the second uplink information is UCI other than HARQ-ACK. The HARQ-ACK at least includes first HARQ-ACK, and the first HARQ-ACK is HARQ-ACKI encoded in the first HARQ-ACK codebook.

The first selection module 701 is further configured for selecting the third PUCCH from a fourth PUCCH set, and the fourth PUCCH set is a PUCCH set configured for the first HARQ-ACK codebook.

Alternatively, the first selection module 701 is further configured for selecting the third PUCCH from a fifth PUCCH set, and the fifth PUCCH set is a PUCCH set configured for the UCI.

Alternatively, the first selection module 701 is further configured for selecting the third PUCCH from a sixth PUCCH set, and the sixth PUCCH set is a PUCCH set configured by the network device for simultaneous transmission of a plurality of uplink information.

In another embodiment, the first transmission module 703 is further configured for transmitting the first uplink information and the second uplink information to the network device by means of the third PUCCH in a sub-slot where the first PUCCH is located, and the first HARQ-ACK codebook is carried onto the sub-slot of the first PUCCH.

In another embodiment not covered by the invention, the carrying module 702 is further configured for carrying the first uplink information carried on the first PUCCH and the second uplink information carried on the second PUCCH onto the third PUCCH if a priority of the first uplink information and a priority of the second uplink information are the same.

In another embodiment, the carrying module 702 is further configured for carrying the first uplink information carried on the first PUCCH and the second uplink information carried on the second PUCCH onto the third PUCCH if the priority of the first uplink information and the priority of the second uplink information are different.

In another embodiment, the carrying module 702 is further configured for carrying the first uplink information carried on the first PUCCH and the second uplink information carried on the second PUCCH onto the third PUCCH if a distance between the first PUCCH and a downlink channel in the time domain satisfies a latency demand of the terminal and a distance between the second PUCCH and the downlink channel in the time domain satisfies a latency condition of the terminal.

In another embodiment, the carrying module 702 is further configured for carrying the first uplink information carried on the first PUCCH and the second uplink information carried on the second PUCCH onto the third PUCCH if a distance between the third PUCCH and a downlink channel in the time domain satisfies a latency demand of the terminal.

Note that the first selection module 701 and the carrying module 702 may be implemented by a processor, and the first transmission module 703 may be implemented by a transceiver, that is, by a receiver and a transmitter.

In the embodiments of the present application, if the first PUCCH and the second PUCCH overlap in the time domain, the third PUCCH is selected from the PUCCH set, the first uplink transmission data and the second uplink transmission data are carried onto the third PUCCH, and the first uplink information and the second uplink information are transmitted to the network device by means of the third PUCCH. Since both the first uplink transmission data and second uplink transmission data are carried onto the third PUCCH, the first uplink transmission data and the second uplink transmission data are subjected to multiplex transmission, and the reliability of data transmission is thereby improved, latency is reduced, and unnecessary retransmission is avoided.

FIG. 8 is a schematic structural diagram of an uplink data transmission apparatus according to an exemplary embodiment not covered by the invention, and the apparatus includes a second selection module 801 and a second transmission module 802.

The second selection module 801 is configured for selecting one PUCCH from a first PUCCH and a second PUCCH if the first PUCCH and the second PUCCH to be transmitted overlap in a time domain.

The second transmission module 802 is configured for transmitting uplink information carried on the selected PUCCH to a network device by means of the selected PUCCH.

In an embodiment, the second selection module 801 is further configured for selecting one PUCCH with a later scheduling time from the first PUCCH and the second PUCCH according to a scheduling time of the first PUCCH and a scheduling time of the second PUCCH.

The second selection module 801 is further configured for selecting one PUCCH with a shortest length from the first PUCCH and the second PUCCH according to a length of the first PUCCH in a time frequency and a length of the second PUCCH in the time frequency.

The second selection module 801 is further configured for selecting one PUCCH with an earlier ending time from the first PUCCH and the second PUCCH according to an ending time of the first PUCCH in the time domain and an ending time of the second PUCCH in the time domain.

Alternatively, the second selection module 801 is further configured for selecting a PUCCH where the uplink information occupying a minimum time frequency resource is located from the first PUCCH and the second PUCCH according to a time frequency resource of the PUCCH occupied by first uplink information and a time frequency resource of the PUCCH occupied by second uplink information.

Note that the second selection module 801 may be implemented by a processor, and the second transmission module 802 may be implemented by a transceiver, that is, by a receiver and a transmitter.

In the embodiments of the present application, if the first PUCCH and the second PUCCH overlap in the time domain, the terminal selects and transmits one PUCCH, and resources are thereby saved in this way. Further, when the terminal selects one PUCCH, the terminal may select the PUCCH that is scheduled later from the first PUCCH and the second PUCCH, so that the priority may be determined based on the global domain and implementation may be made through the scheduling sequence. When the terminal selects one PUCCH for transmission, the terminal may also select the PUCCH with a small HARQ-ACK codebook window, select the PUCCH with an earlier ending time, or selects the PUCCH with a small multiplexing window from the first PUCCH and the second PUCCH, and in this way, it is ensured that the HARQ-ACK with a short latency is transmitted first.

FIG. 9 is a schematic structural diagram of a terminal according to an exemplary embodiment not covered by the invention. The terminal includes a processor 801, a receiver 902, a transmitter 903, a memory 904, and a bus 905.

The processor 901 includes one or more processing cores, and the processor 901 executes various functional applications and information processing by running software programs and modules.

The receiver 902 and the transmitter 903 may be implemented as a communication component, and the communication component may be a communication chip.

The memory 904 is connected to the processor 901 through the bus 905.

The memory 904 may be used to store at least one instruction, and the processor 901 is used to execute the at least one instruction to implement each step in executed by the terminal in the foregoing method embodiments.

In addition, the memory 904 may be implemented by any type of volatile or non-volatile storage device or a combination thereof, and the volatile or non-volatile storage device includes but not limited to a magnetic disk or an optical disk, an electrically erasable programmable read-only memory (EEPROM), an erasable programmable read-only memory (EPROM), a static random access memory (SRAM), a read-only memory (ROM), a magnetic memory, a flash memory, and a programmable read-only memory (PROM).

The present application provides a computer readable storage medium, the computer readable storage medium stores at least one instruction, and the at least one instruction is loaded and executed by the processor to implement the uplink data transmission method provided in the method embodiments.

The present application further provides a computer program product, and when the computer program product runs on a computer, the computer is enabled to execute the uplink data transmission method provided in the method embodiments.

A person of ordinary skill in the art can understand that all or part of the steps in the foregoing embodiments may be completed by hardware or may be completed by a program instructing related hardware. The program may be stored in a computer-readable storage medium, and the storage medium may be a read-only memory, a magnetic disk, or an optical disk.

The above description is only optional embodiments of the present application and is not intended to limit the present application. The scope of the invention is defined by the appended claims.

## Claims

1. An uplink data transmission method performed by an apparatus, comprising:
selecting (S302 and S303) a third physical uplink control channel, PUCCH, from a PUCCH set if a first PUCCH to be transmitted and a second PUCCH to be transmitted overlap in a time domain and if a priority of first uplink information carried on the first PUCCH and a priority of second uplink information carried on the second PUCCH are different, the first uplink information being a first hybrid automatic repeat reQuest feedback codebook, HARQ-ACK codebook, and the second uplink information being a second HARQ-ACK codebook,
wherein selecting (S302 and S303) the third PUCCH from the PUCCH set comprises:
selecting the third PUCCH from a first PUCCH set, wherein the first PUCCH set is a PUCCH set configured for uplink information with a highest priority in the first uplink information and the second uplink information;
carrying (S304) the first uplink information carried on the first PUCCH and the second uplink information carried on the second PUCCH onto the third PUCCH; and
transmitting (S305) the first uplink information and the second uplink information to a network device by means of the third PUCCH in a sub-slot where the first PUCCH is located, wherein the first HARQ-ACK codebook is carried onto the sub-slot of the first PUCCH.

2. The method according to claim 1, wherein selecting (S302 and S303) the third PUCCH from the PUCCH set further comprises:
selecting the third PUCCH from the PUCCH set according to at least one of:
instruction information of the network device; and
a sum of amount of data, wherein the sum of amount of data is a sum of an amount of data of the first uplink information and an amount of data of the second uplink information.

3. The method according to claim 1, wherein carrying (S304) the first uplink information carried on the first PUCCH and the second uplink information carried on the second PUCCH onto the third PUCCH comprises:
performing carrying (S304) the first uplink information carried on the first PUCCH and the second uplink information carried on the second PUCCH onto the third PUCCH if a distance between the first PUCCH and a downlink channel in the time domain satisfies a latency demand of a terminal and a distance between the second PUCCH and the downlink channel in the time domain satisfies a latency demand of the terminal.

4. The method according to claim 3, wherein selecting (S302 and S303) the third PUCCH from the PUCCH set further comprises:
selecting, based on second instruction information and a sum of data amounts of the first HARQ-ACK codebook and the second HARQ-ACK codebook, the third PUCCH instructed by the second instruction information and carrying amount of data not less than the sum of data amounts, from the PUCCH set.

5. An uplink data transmission apparatus, comprising:
a first selection module (701), configured for selecting a third physical uplink control channel, PUCCH, from a PUCCH set if a first PUCCH to be transmitted and a second PUCCH to be transmitted overlap in a time domain and if a priority of first uplink information carried on the first PUCCH and a priority of second uplink information carried on the second PUCCH are different, the first uplink information is a first hybrid automatic repeat request feedback codebook, HARQ-ACK codebook, and the second uplink information is a second HARQ-ACK codebook,
the first selection module (701) being further configured for selecting the third PUCCH from a first PUCCH set, wherein the first PUCCH set is a PUCCH set configured for uplink information with a highest priority in the first uplink information and the second uplink information;
a carrying module (702), configured for carrying the first uplink information carried on the first PUCCH and the second uplink information carried on the second PUCCH onto the third PUCCH; and
a first transmission module (703), configured for transmitting the first uplink information and the second uplink information to a network device by means of the third PUCCH in a sub-slot where the first PUCCH is located, wherein the first HARQ-ACK codebook is carried onto the sub-slot of the first PUCCH.

6. The apparatus according to claim 5, wherein
the first selection module (701) is further configured for selecting the third PUCCH from the PUCCH set according to at least one of:
instruction information of the network device; and
a sum of amount of data, wherein the sum of amount of data is a sum of an amount of data of the first uplink information and an amount of data of the second uplink information.

7. The apparatus according to claim 5, wherein
the carrying module (702) is further configured for carrying the first uplink information carried on the first PUCCH and the second uplink information carried on the second PUCCH onto the third PUCCH if a distance between the first PUCCH and a downlink channel in the time domain satisfies a latency demand of a terminal and a distance between the second PUCCH and the downlink channel in the time domain satisfies a latency demand of the terminal.

8. The apparatus according to claim 7, wherein
the first selection module (701) is further configured for selecting, based on second instruction information and a sum of data amounts of the first HARQ-ACK codebook and the second HARQ-ACK codebook, the third PUCCH instructed by the second instruction information and carrying amount of data not less than the sum of data amounts, from the PUCCH set.

9. A computer readable storage medium, configured to store a instruction, wherein the instruction is configured to be executed by a processor to implement the uplink data transmission method according to any one of claims 1 to 4.

## Patentansprüche

1. Uplink-Datenübertragungsverfahren, das von einer Einrichtung durchgeführt wird, umfassend:
Auswählen (S302 und S303) eines dritten physikalischen Uplink-Steuerkanals, PUCCH, aus einem PUCCH-Satz, wenn sich ein erster zu übertragender PUCCH und ein zweiter zu übertragender PUCCH in einer Zeitdomäne überlappen und wenn eine Priorität der ersten Uplink-Informationen, die auf dem ersten PUCCH getragen werden, und eine Priorität der zweiten Uplink-Informationen, die auf dem zweiten PUCCH getragen werden, unterschiedlich sind, wobei die ersten Uplink-Informationen ein erstes hybrides automatisches Wiederholungsanforderungs-Feedback-Codebuch, HARQ-ACK-Codebuch, sind und die zweiten Uplink-Informationen ein zweites HARQ-ACK-Codebuch sind,
wobei das Auswählen (S302 und S303) des dritten PUCCH aus dem PUCCH-Satz Folgendes umfasst:
Auswahlen des dritten PUCCH aus einem ersten PUCCH-Satz, wobei der erste PUCCH-Satz ein PUCCH-Satz ist, der für Uplink-Informationen mit einer höchsten Priorität unter den ersten Uplink-Informationen und den zweiten Uplink-Informationen konfiguriert ist;
Tragen (S304) der ersten Uplink-Informationen, die auf dem ersten PUCCH getragen werden, und der zweiten Uplink-Informationen, die auf dem zweiten PUCCH getragen wird, auf den dritten PUCCH; und
Übertragen (S305) der ersten Uplink-Informationen und der zweiten Uplink-Informationen an eine Netzvorrichtung mittels des dritten PUCCH in einem Teilschlitz, in dem sich der erste PUCCH befindet, wobei das erste HARQ-ACK-Codebuch auf den Teilschlitz des ersten PUCCH getragen wird.

2. Verfahren nach Anspruch 1, wobei das Auswählen (S302 und S303) des dritten PUCCH aus dem PUCCH-Satz ferner Folgendes umfasst:
Auswählen des dritten PUCCH aus dem PUCCH-Satz gemäß mindestens einem von Folgenden:
Anweisungsinformationen der Netzvorrichtung; und
einer Summe von Datenmengen, wobei die Summe von Datenmengen eine Summe einer Datenmenge der ersten Uplink-Informationen und einer Datenmenge der zweiten Uplink-Informationen ist.

3. Verfahren nach Anspruch 1, wobei das Tragen (S304) der ersten Uplink-Informationen, die auf dem ersten PUCCH getragen werden, und der zweiten Uplink-Informationen, die auf dem zweiten PUCCH getragen werden, auf den dritten PUCCH Folgendes umfasst:
Durchführen des Tragens (S304) der ersten Uplink-Informationen, die auf dem ersten PUCCH getragen werden, und der zweiten Uplink-Informationen, die auf dem zweiten PUCCH getragen werden, auf den dritten PUCCH, wenn ein Abstand zwischen dem ersten PUCCH und einem Downlink-Kanal in der Zeitdomäne eine Latenzanforderung eines Endgeräts erfüllt und ein Abstand zwischen dem zweiten PUCCH und dem Downlink-Kanal in der Zeitdomäne eine Latenzanforderung des Endgeräts erfüllt.

4. Verfahren nach Anspruch 3, wobei das Auswählen (S302 und S303) des dritten PUCCH aus dem PUCCH-Satz ferner Folgendes umfasst:
Auswählen, basierend auf zweiten Anweisungsinformationen und einer Summe von Datenmengen des ersten HARQ-ACK-Codebuchs und des zweiten HARQ-ACK-Codebuchs, des dritten PUCCH, der durch die zweiten Anweisungsinformationen angewiesen wird und eine Datenmenge trägt, die nicht kleiner als die Summe der Datenmengen ist, aus dem PUCCH-Satz.

5. Uplink-Datenübertragungseinrichtung, umfassend:
ein erstes Auswahlmodul (701), das konfiguriert ist zum Auswählen eines dritten physikalischen Uplink-Steuerkanals, PUCCH, aus einem PUCCH-Satz, wenn sich ein erster zu übertragender PUCCH und ein zweiter zu übertragender PUCCH in einer Zeitdomäne überlappen und wenn eine Priorität der ersten Uplink-Informationen, die auf dem ersten PUCCH getragen werden, und eine Priorität der zweiten Uplink-Informationen, die auf dem zweiten PUCCH getragen werden, unterschiedlich sind, wobei die ersten Uplink-Informationen ein erstes hybrides automatisches Wiederholungsanforderungs-Feedback-Codebuch, HARQ-ACK-Codebuch, sind und die zweiten Uplink-Informationen ein zweites HARQ-ACK-Codebuch sind,
wobei das erste Auswahlmodul (701) ferner zum Auswählen des dritten PUCCH aus einem ersten PUCCH-Satz konfiguriert ist, wobei der erste PUCCH-Satz ein PUCCH-Satz ist, der für Uplink-Informationen mit einer höchsten Priorität unter den ersten Uplink-Informationen und den zweiten Uplink-Informationen konfiguriert ist;
ein Übertragungsmodul (702), das konfiguriert ist zum Tragen der ersten Uplink-Informationen, die auf dem ersten PUCCH getragen werden, und der zweiten Uplink-Informationen, die auf dem zweiten PUCCH getragen wird, auf den dritten PUCCH; und
ein erstes Übertragungsmodul (703), das konfiguriert ist zum Übertragen der ersten Uplink-Informationen und der zweiten Uplink-Informationen an eine Netzvorrichtung mittels des dritten PUCCH in einem Teilschlitz, in dem sich der erste PUCCH befindet, wobei das erste HARQ-ACK-Codebuch auf den Teilschlitz des ersten PUCCH getragen wird.

6. Einrichtung nach Anspruch 5, wobei
das erste Auswahlmodul (701) ferner konfiguriert ist zum Auswählen des dritten PUCCH aus der PUCCH-Menge gemäß mindestens einem von Folgendem:
Anweisungsinformationen der Netzvorrichtung; und
einer Summe von Datenmengen, wobei die Summe von Datenmengen eine Summe einer Datenmenge der ersten Uplink-Informationen und einer Datenmenge der zweiten Uplink-Informationen ist.

7. Einrichtung nach Anspruch 5, wobei
das Übertragungsmodul (702) ferner konfiguriert ist zum Tragen der ersten Uplink-Informationen, die auf dem ersten PUCCH getragen werden, und der zweiten Uplink-Informationen, die auf dem zweiten PUCCH getragen werden, auf den dritten PUCCH, wenn ein Abstand zwischen dem ersten PUCCH und einem Downlink-Kanal in der Zeitdomäne eine Latenzanforderung eines Endgeräts erfüllt und ein Abstand zwischen dem zweiten PUCCH und dem Downlink-Kanal in der Zeitdomäne eine Latenzanforderung des Endgeräts erfüllt.

8. Eeinrichtung nach Anspruch 7, wobei
das erste Auswahlmodul (701) ferner konfiguriert ist zum Auswählen, basierend auf zweiten Anweisungsinformationen und einer Summe von Datenmengen des ersten HARQ-ACK-Codebuchs und des zweiten HARQ-ACK-Codebuchs, des dritten PUCCH, der durch die zweiten Anweisungsinformationen angewiesen wird und eine Datenmenge trägt, die nicht kleiner als die Summe der Datenmengen ist, aus dem PUCCH-Satz.

9. Computerlesbares Speichermedium, das konfiguriert ist zum Speichern einer Anweisung, wobei die Anweisung konfiguriert ist, um von einem Prozessor ausgeführt zu werden, um ein Uplink-Datenübertragungsverfahren nach einem der Ansprüche 1 bis 4 zu implementieren.

## Revendications

1. Procédé de transmission de données en liaison montante réalisé par un appareil, comprenant :
la sélection (S302 et S303) d'un troisième canal physique de commande en liaison montante, PUCCH, dans un ensemble de PUCCH si un premier PUCCH à transmettre et un deuxième PUCCH à transmettre se chevauchent dans un domaine temporel et si une priorité de premières informations en liaison montante véhiculées sur le premier PUCCH et une priorité de deuxièmes informations en liaison montante véhiculées sur le deuxième PUCCH sont différentes, les premières informations en liaison montante consistant en un premier dictionnaire de retour de demande de répétition automatique hybride, dictionnaire HARQ-ACK, et les deuxièmes informations en liaison montante consistant en un deuxième dictionnaire HARQ-ACK,
la sélection (S302 et S303) du troisième PUCCH dans l'ensemble de PUCCH comprenant :
la sélection du troisième PUCCH dans un premier ensemble de PUCCH, le premier ensemble de PUCCH étant un ensemble de PUCCH configuré pour des informations en liaison montante avec une priorité la plus élevée dans les premières informations en liaison montante et les deuxièmes informations en liaison montante ;
le fait de véhiculer (S304) les premières informations en liaison montante véhiculées sur le premier PUCCH et les deuxièmes informations en liaison montante véhiculées sur le deuxième PUCCH sur le troisième PUCCH ; et
la transmission (S305) des premières informations en liaison montante et des deuxièmes informations en liaison montante à un dispositif de réseau au moyen du troisième PUCCH dans un sous-slot dans lequel se situe le premier PUCCH, le premier dictionnaire HARQ-ACK étant véhiculé sur le sous-slot du premier PUCCH.

2. Procédé selon la revendication 1, la sélection (S302 et S303) du troisième PUCCH dans l'ensemble de PUCCH comprenant en outre :
la sélection du troisième PUCCH dans l'ensemble de PUCCH selon au moins un parmi :
des informations d'indication du dispositif de réseau ; et
une somme de quantité de données, la somme de quantité de données consistant en une somme d'une quantité de données des premières informations en liaison montante et d'une quantité de données des deuxièmes informations en liaison montante.

3. Procédé selon la revendication 1, le fait de véhiculer (S304) les premières informations en liaison montante véhiculées sur le premier PUCCH et les deuxièmes informations en liaison montante véhiculées sur le deuxième PUCCH sur le troisième PUCCH comprenant :
le fait de véhiculer (S304) les premières informations en liaison montante véhiculées sur le premier PUCCH et les deuxièmes informations en liaison montante véhiculées sur le deuxième PUCCH sur le troisième PUCCH si une distance entre le premier PUCCH et un canal en liaison descendante dans le domaine temporel satisfait à une exigence de latence d'un terminal et une distance entre le deuxième PUCCH et le canal en liaison descendante dans le domaine temporel satisfait à une exigence de latence du terminal.

4. Procédé selon la revendication 3, la sélection (S302 et S303) du troisième PUCCH dans l'ensemble de PUCCH comprenant en outre :
la sélection, sur la base de deuxièmes informations d'indication et d'une somme de quantités de données du premier dictionnaire HARQ-ACK et du deuxième dictionnaire HARQ-ACK, du troisième PUCCH indiqué par les deuxièmes informations d'indication et le fait de véhiculer une quantité de données supérieure ou égale à la somme de quantités de données, dans l'ensemble de PUCCH.

5. Appareil de transmission de données en liaison montante, comprenant :
un premier module de sélection (701), configuré pour sélectionner un troisième canal physique de commande en liaison montante, PUCCH, dans un ensemble de PUCCH si un premier PUCCH à transmettre et un deuxième PUCCH à transmettre se chevauchent dans un domaine temporel et si une priorité de premières informations en liaison montante véhiculées sur le premier PUCCH et une priorité de deuxièmes informations en liaison montante véhiculées sur le deuxième PUCCH sont différentes, les premières informations en liaison montante consistent en un premier dictionnaire de retour de demande de répétition automatique hybride, dictionnaire HARQ-ACK, et les deuxièmes informations en liaison montante consistent en un deuxième dictionnaire HARQ-ACK,
le premier module de sélection (701) étant en outre configuré pour sélectionner le troisième PUCCH dans un premier ensemble de PUCCH, le premier ensemble de PUCCH étant un ensemble de PUCCH configuré pour des informations en liaison montante avec une priorité la plus élevée dans les premières informations en liaison montante et les deuxièmes informations en liaison montante ;
un module de transport (702), configuré pour véhiculer les premières informations en liaison montante véhiculées sur le premier PUCCH et les deuxièmes informations en liaison montante véhiculées sur le deuxième PUCCH sur le troisième PUCCH ; et
un premier module de transmission (703), configuré pour transmettre les premières informations en liaison montante et les deuxièmes informations en liaison montante à un dispositif de réseau au moyen du troisième PUCCH dans un sous-slot dans lequel se situe le premier PUCCH, le premier dictionnaire HARQ-ACK étant véhiculé sur le sous-slot du premier PUCCH.

6. Appareil selon la revendication 5,
le premier module de sélection (701) étant en outre configuré pour sélectionner le troisième PUCCH dans l'ensemble de PUCCH selon au moins un parmi :
des informations d'indication du dispositif de réseau ; et
une somme de quantité de données, la somme de quantité de données consistant en une somme d'une quantité de données des premières informations en liaison montante et d'une quantité de données des deuxièmes informations en liaison montante.

7. Appareil selon la revendication 5,
le module de transport (702) étant en outre configuré pour véhiculer les premières informations en liaison montante véhiculées sur le premier PUCCH et les deuxièmes informations en liaison montante véhiculées sur le deuxième PUCCH sur le troisième PUCCH si une distance entre le premier PUCCH et un canal en liaison descendante dans le domaine temporel satisfait à une exigence de latence d'un terminal et une distance entre le deuxième PUCCH et le canal en liaison descendante dans le domaine temporel satisfait à une exigence de latence du terminal.

8. Appareil selon la revendication 7,
le premier module de sélection (701) étant en outre configuré pour sélectionner, sur la base de deuxièmes informations d'indication et d'une somme de quantités de données du premier dictionnaire HARQ-ACK et du deuxième dictionnaire HARQ-ACK, le troisième PUCCH indiqué par les deuxièmes informations d'indication et véhiculer une quantité de données supérieure ou égale à la somme de quantités de données, dans l'ensemble de PUCCH.

9. Support de stockage lisible par ordinateur, configuré pour stocker une instruction, l'instruction étant configurée pour être exécutée par un processeur afin de mettre en œuvre le procédé de transmission de données en liaison montante selon l'une quelconque des revendications 1 à 4.
